# EUROPEAN PATENT APPLICATION

(11) **EP 3 291 640 A1**
(43) Date of publication of application: **07.03.2018**
(21) Application number: 16187418.5
(22) Date of filing: 06.09.2016
(51) Int. Cl.: H05B 3/50, B60H 1/00, F24H 3/00, F24H 9/00

(54) **ELECTRIC HEATER**

(71) Applicant: Mahle International GmbH, 70376 Stuttgart (DE)
(72) Inventor: Marlier, Eric, 67120 Kolbsheim (FR)
(74) Representative: Grauel, Andreas

(57) **Abstract**

The invention relates to an electric heater (1, 101), in particufar for a heating or an air-conditioning system of a motor vehicle, with a heater core (3, 103) comprising a plurality of electric heating elements (7, 107) and comprising a plurality of radiator elements (9, 109, 132, 135), the electric heater having at least one frame element (4, 104) and having an electronic controller (2, 102), wherein the heater core (3,103) comprises a first long lateral side (122) and a second long lateral side (123) opposite the first long lateral side (122), wherein the electric heating elements (7, 107) and the radiator elements (9, 109, 132, 135) are arranged substantially parallel to each other and parallel to the first long lateral side (122) and the second long lateral side (123) of the heater core (3, 103), wherein the at least one frame element (104) is connected to the first long lateral side (122) and/or the second long lateral side (123) of the heater core (3, 103) by gluing.

## Description

### Field of the invention

The invention relates to an electric heater, in particular for a heating or an air-conditioning system of a motor vehicle, with a heater core comprising a plurality of electric heating elements and comprising a plurality of radiator elements, the electric heater having at least one frame element and having an electronic controller, wherein the heater core comprises a first long lateral side and a second long lateral side opposite the first long lateral side, wherein the electric heating elements and the radiator elements are arranged substantially parallel to each other and parallel to the first long lateral side and the second long lateral side of the heater core.

### Description of the related art

Electric heaters are well known in the art especially for the use as an auxiliary heater in a heating or an air-conditioning system of a motor vehicle. The electric heater is used for example to heat up an air flow generated by a fan of the heating or the air-conditioning system. Such electric heaters often comprise a plurality of electric heating elements which are controlled by an electronic controller and which are arranged together with a plurality of heat dissipating radiator elements as a heater core. The heater core is usually connected to at least one frame element by clip connection means or by crimping connection means. Such clip connection means or crimping connection means require a relatively high amount of working time during the assembly of the electric heater and they additionally increase the size of the electric heater.

The electric heating elements often comprise PTC-elements. Especially when the PTC-elements are used in a high voltage operation period, noise might be generated due to vibration of the PTC-elements. The noise might not only to uncomfortable feeling of the passengers of the motor vehicle, additionally the vibrations of the PTC-elements negatively affect the durability of the clip connection means or the crimping connection means therefore reducing the durability of the electric heater.

### Object of the invention, solution, advantages

Therefore it is the object of the invention to provide an electric heater which damps vibrations of the electric heating elements, especially when the electric heating elements comprise PTC-elements. Furthermore, the provided electric heater allows the use of larger electric heating elements without increasing the size of the electric heater by omitting clip connection means for securing the heater core within a frame element.

The object is achieved by an embodiment according the features of claim 1.

According to an embodiment of the invention an electric heater is provided, in particular for a heating or an air-conditioning system of a motor vehicle, with a heater core comprising a plurality of electric heating elements and comprising a plurality of radiator elements, the electric heater having at least one frame element and having an electronic controller, wherein the heater core comprises a first long lateral side and a second long lateral side opposite the first long lateral side, wherein the electric heating elements and the radiator elements are arranged substantially parallel to each other and parallel to the first long lateral side and the second long lateral side of the heater core, wherein the at least one frame element is connected to the first long lateral side and/or the second long lateral side of the heater core by gluing. Therefore, clip connection means to connect the heater core to the frame element can be omitted. Additionally the glue absorbs vibrations generated by the electric heating elements such that they are not transmitted to the frame element. The glue is therefore elastically deformable. Advantageously, the type of glue, which might be commonly used to hold together the electric heating elements and radiator elements of the heater core, can also be used to glue the at least one frame element to the long lateral sides of the heater core.

According to an advantageous embodiment of the invention, the at least one frame element comprises an inner rim, wherein at least one portion of the inner rim is connected to the first long lateral side and/or connected to the second long lateral side of the heater core by gluing.

In a further embodiment, the electric heating elements comprise contact sheets, wherein a first contact sheet is arranged at the first long lateral side of the heater core and a second contact sheet is arranged at the second long lateral side of the heater core, wherein the at least one frame element is connected to the first contact sheet and/or the second contact sheet by gluing. Therefore no further holding means are necessary.

It is preferable, if the first contact sheet comprises a first outer side which is facing away from the heater core and the second contact sheet comprises a second outer side which is facing away from the heater core, wherein the at least one frame element is connected to the first outer side and/or the second outer side by gluing. Therefore no further holding means are necessary.

In a further embodiment, the inner rim of the at least one frame element comprises a first longitudinal side and a second longitudinal side opposite the first longitudinal side, wherein the first longitudinal side is connected to the first long lateral side of the heater core and the second longitudinal side is connected to the second long lateral side of the heater core by gluing. Therefore no further holding means are necessary.

Additionally the first outer sheet comprises a first inner side opposite the first outer side and the second outer sheet comprises a second inner side opposite the second outer side, wherein the first inner side is connected to a first outer radiator element and the second inner side is connected to a second outer radiator element by gluing or brazing.

Furthermore it is preferable, that the at least one frame element comprises a plurality of through openings and the radiator elements form interstices, wherein the through openings and the interstices can be flowed through by a fluid in a flow direction F perpendicular to a longitudinal extension direction L of the electric heating elements. Thereby, the flow resistance caused by the at least one frame element is reduced.

In another embodiment it is favorable that at least one of the electric heating elements comprises at least one PTC-element.

Furthermore it is advantageous, that the electronic controller is arranged on a first transverse side of the at least one frame element perpendicular to the first long lateral side and the second long lateral side of the heater core.

According to a further aspect of the invention, the electronic controller comprises electric connectors which are electrically connected to either a positive pole of a power supply or a negative pole of a power supply and are arranged in an alternating order, wherein the first contact sheet or the second contact sheet is electrically connected to one of the electric connectors.

In another embodiment of the invention, the electronic controller comprises a housing, wherein the at least one frame element is connected to the housing of the electronic controller by at least one clip connection.

In a further advantageous embodiment, the at least one frame element frames the heater core.

Further preferable embodiments of the invention are described in the claims and the following description of the drawings.

### Description of the drawings

The invention is explained in detail below by means of an exemplary embodiment and with reference to the drawings, in which:
- Fig.1: shows an electric heater according to the state of the art,
- Fig. 2: shows a detail of the electric heater according to Fig. 1,
- Fig. 3: shows a first embodiment of an inventive electric heater, and
- Fig. 4: shows a detail of the electric heater according to Fig. 3.

### Preferred embodiments of the invention

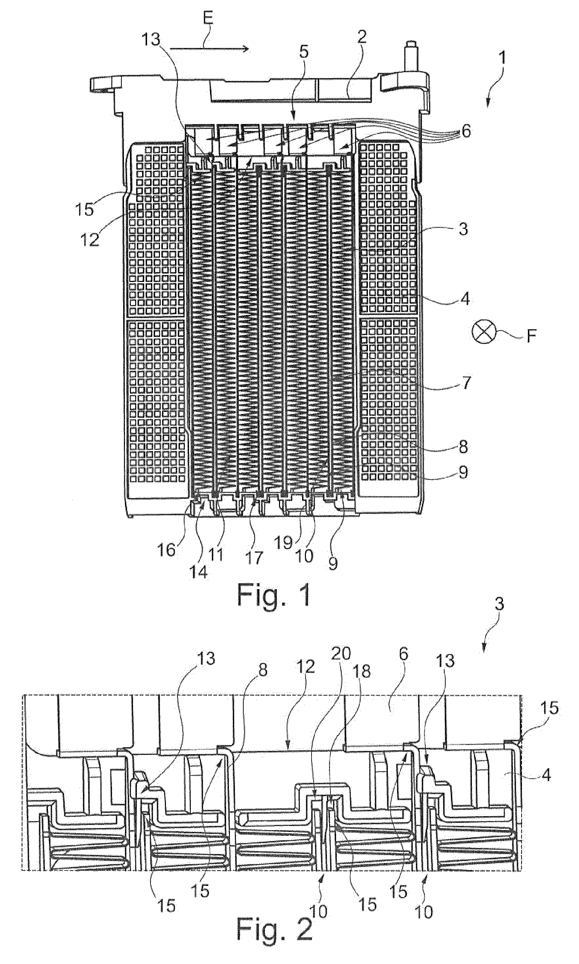

Fig. 1 shows an electric heater 1 according to the state of the art. The electric heater 1 comprises an electronic controller 2, which is used to control the electric heater 1, a heater core 3 and a frame element 4 framing the heater core 3. The electronic controller 2 is electrically connected to a power supply. At a first short side 5 of the electronic controller 2, which is facing towards the heater core 3, a plurality of electric connectors 6 is shown. The electric connectors 6 are electrically connected to either a positive pole of the power supply or a negative pole of the power supply. The electric connectors 6 that are electrically connected to a positive pole of the power supply and the electric connectors 6 that are electrically connected to a negative pole of the power supply are arranged in an alternating order parallel to the elongation direction E of the first short side 5 of the electronic controller 2.

The heater core 3 comprises a plurality of electric heating elements 7 which comprise contact sheets 8. The contact sheets 8 are either electrically connected to an electric connector 6 or electrically connected to an adjacent contact sheet 8. The electrical connection between the contact sheets 8 is created through the radiator elements 9, which are arranged between the electric heating elements 7. The contact sheets 8 and the radiator elements 9 are conductive. Through the electrical connection of the contact sheets 8 with adjacent contact sheets 8 or with the electric connectors 6, it is realized, that the PTC-elements 10, which are arranged between the contact sheets 8, are connected to the power supply within a closed electrical circuit. Thus the PTC-elements 10 can generate heat by applying an electric current to them.

The inventive electric heater 1 might be for example utilised as an auxiliary heater or pre-heater in a heating or an air-conditioning system of a motor vehicle. In this case the electric heater 1 heats up an air flow, which flows through interstices 11 formed by the radiator elements 9 in a flow direction F in order to supply warm air into the passenger compartment of the motor vehicle.

For this purpose the heating or the air-conditioning system usually comprises a housing which is not illustrated in Fig. 1. The housing comprises air ducts that are formed by walls of the housing. A fan is used to generate the air flow, wherein the air is sucked from the environment or/and out of the passenger compartment of the motor vehicle and blown through the housing such that the air of the air flow will subsequently be heated up by the heater core 3. In the flow direction F of the air flow after the electric heater 1 the air is directed through ducts and leaves the housing at ejector means to the passenger compartment.

The number and size of the electric heating elements 7 can vary in different embodiments. The contact sheets 8 have first ends 15, which are pointing towards the electronic controller 2 and second ends 16 opposite the first ends 15. The first ends 15 of the contact sheets 8 that are electrically connected to the electric connectors 6, are connected to a first transverse side 12 of the frame element 4 by first clip connections 13. The second ends 16 of the contact sheets 8 point to a second transverse side 14 of the frame element 4, which is arranged opposite the first transverse side 12, and are arranged in recesses 17 provided by the second transverse side 14 of the frame element 4. Thereby, the frame element 4 and the second ends 16 of the contact sheets 8 create a crimping connection 19.

Fig. 2 shows in detail the first transverse side 12 of the frame element 4. Exemplary every second of the first ends 15 of the contact sheets 8 that are electrically connected to the electric connectors 6, are fixed to the frame element 4 by first clip connections 13. The first ends 15 of the contact sheets 8 that are not connected to an electric connector 6 are arranged in recesses 18 provided by the first transverse side 12 of the frame element 4. Thereby, the frame element 4 and the first ends 15 of the contact sheets 8 create a crimping connection 20. The first clip connections 13 secure the heater core 3 in the frame element 4. Vibrations of the PTC-elements 10, which appear during the operation of the PTC-elements, apply forces to the clip connections 13 and the crimping connections 20 and reduce their durability.

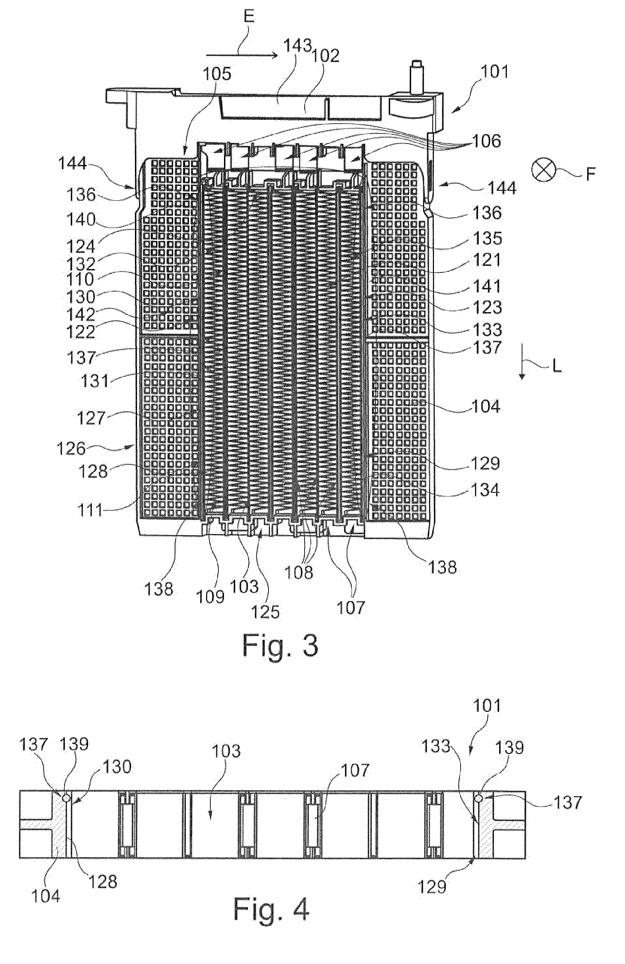

Fig. 3 shows a first embodiment of an inventive electric heater 101. The electric heater 101 comprises an electronic controller 102, which is used to control the electric heater 101, a heater core 103 and a frame element 104, which is framing the heater core 103. The electronic controller 102 comprises a housing 143 which is connected to the frame element 104 by second clip connections 144. The electronic controller 102 is electrically connected to a power supply. At a first short side 105 of the electronic controller 102, which is facing towards the heater core 103, a plurality of electric connectors 106 is shown. The electric connectors 106 are electrically connected to either a positive pole of the power supply or a negative pole of the power supply. The electric connectors 106 that are electrically connected to a positive pole of the power supply and the electric connectors 106 that are electrically connected to a negative pole of the power supply are arranged in an alternating order parallel to the elongation direction E of the first short side 105 of the electronic controller 102.

The inventive electric heater 101 might be for example utilised as an auxiliary heater or pre-heater in a heating or an air-conditioning system of a motor vehicle. In this case the electric heater 101 heats up an air flow, which passes the heat transfer surface of the electric heater 101 in order to supply warm air into the passenger compartment of the motor vehicle. For this purpose the heating or the air-conditioning system usually comprises a housing which is not illustrated in Fig. 3. The housing comprises air ducts that are formed by walls of the housing. A fan is used to generate an air flow, wherein the air is sucked from the environment or/and out of the passenger compartment of the motor vehicle and blown through the housing such that the air of the air flow will subsequently be heated up by the electric heater 101. In the flow direction F of the air flow after the electric heater 101 the air is directed through ducts and leaves the housing at ejector means to the passenger compartment.

The heat transfer surface of the electric heater 101 is substantially provided by contact sheets 108 of electric heating elements 107 and by radiator elements 109 abutting to the contact sheets 108. The electric heating elements 107 with the contact sheets 108 and the radiator elements 109 are comprised by the heater core 103. The electric heating elements 107 respectively comprise two contact sheets 108 which are arranged adjacent to each other. One of the two contact sheets 108 is electrically connected to either a positive electric connector 6 or a negative electric connector 6.

The electric heater 101 shown in Fig. 3 is arranged in the main air duct of the housing of a heating or an air-conditioning system. The heater core 103 features a layered structure consisting of a plurality of the electric heating elements 107 with the contact sheets 108 and a plurality of radiator elements 109. The number and size of the electric heating elements 107 can vary in different embodiments.

The electric heating elements 107 comprise PTC-elements 110 (Positive Temperature Coefficient). PTC-elements 110, for example generated from electrically conductive ceramic materials, are current-conducting and they conduct an electric current better at low temperatures than at high temperatures. The reason here fore is, that their electrical resistance increases with rising temperature. Therefore the conducted current strength and thus the heating power produced becomes lower with rising temperature. Thus, the electric heating elements 107 can be used to generate heat by applying an electric current to them. The electric current is obtained via the electric connectors 6 of the electronic controller 102.

The heater core 103 comprises an air inlet side 121 and an air outlet side opposite the air inlet side 121. The flow direction F of the air flow in the air duct is shown in Fig. 3. The air flow impacts the heater core 103 perpendicular to the air inlet side 121 of the heater core 103 and takes up heat from the electric heating elements 107 and the radiator elements 109 while it flows through interstices 111 formed by the radiator elements 109.

The heater core 103 comprises a first long lateral side 122 and a second long lateral side 123 opposite the first long lateral side 122. Additionally the heater core 103 comprises a first short lateral side 124 and a second short lateral side 125 opposite the first short lateral side 124. The first short lateral side 124 and the second short lateral side 125 connect the first long lateral side 122 and the second long lateral side 123 of the heater core 103. The electric heating elements 107, the contact sheets 108 and the radiator elements 109 extend perpendicular to the flow direction F of the air flow and the first and second short lateral sides 124, 125 and parallel to the first long lateral side 122 and the second long lateral side 123 of the heater core 103 in an extension direction L.

The heater core 103 is framed by the frame element 104 which can for example be made out of plastic. In different embodiments, the frame element 104 can have different sizes according to the construction requirements of the heating or the air-conditioning system. The entire extend of the heater core 103 and the frame element 104 projects perpendicular to the flow direction F of the air flow into an air duct, which is not shown in Fig. 3, of the heating or the air-conditioning system. The frame element 104 comprises a plurality of through openings 142 which can be flowed through by the air flow. Thereby, the flow resistance caused by the frame element 104 is reduced.

The frame element 104 comprises an outer edge 126 facing away from the heater core 103. The outer edge 126 of the frame element 104 is attached fluid-tightly to the inner wall, which is not shown in Fig. 3, of the air duct. To enhance fluid-tightness and in order to compensate for tolerances a sealing element, for example made out of plastic foam, which is not show in Fig. 3, can be attached to the outer edge 126 of the frame element 104.

The heater core 103 comprises a first contact sheet 128 which is arranged outwardly at the first long lateral side 122 of the heater core 103. The first contact sheet 128 extends from the first short lateral side 124 to the second short lateral side 125 of the heater core 103. Additionally the heater core 103 comprises a second contact sheet 129 which is arranged outwardly at the second long lateral side 123 of the heater core 103. The second contact sheet 129 extends from the first short lateral short side 124 to the second short lateral side 125 of the heater core 103.

The frame element 104 comprises an inner rim 127 pointing towards the heater core 103. The inner rim 127 of the frame element 104 comprises a first longitudinal side 140 and a second longitudinal side 141 opposite the first longitudinal side 140.

A portion of the inner rim 127 that is located at the first longitudinal side 140 of the inner rim 127 is connected to the first contact sheet 128 of the heater core 103 by gluing. A portion of the inner rim 127 that is located at the second longitudinal side 141 of the inner rim 127 is connected to the second contact sheet 129 of the heater core 103 by gluing.

The first contact sheet 128 comprises a first outer side 130 facing away from the heater core 103 and a first inner side 131 facing towards the heater core 103. The first outer side 130 is connected to the inner rim 127 of the frame element 104 by gluing. The first inner side 131 is connected to a first outer radiator 132 element either by gluing or brazing.

The second contact sheet 129 comprises a second outer side 133 facing away from the heater core 103 and a second inner side 134 facing towards the heater core 103. The second outer side 133 is connected to the inner rim 127 of the frame element 104 by gluing. The second inner side 134 is connected to a second outer radiator element 135 either by gluing or brazing.

During the assembly of the electric heater, the glue used to connect the contact sheets 108 with the radiator elements 109 can also be used to connect the first outer side 130 of the first contact sheet 128 and the second outer side 133 of the second contact sheet 129 to the inner rim 127 of the frame element 104 by gluing.

The glue is either applied to certain application regions 136, 137, 138 which are distributed on the first outer side 130 of the first contact sheet 128 and the second outer side 133 of the second contact sheet 129 or a line of glue is respectively applied to the outer sides 130, 133. Due to the force of gravity the glue can spread on the outer sides 130, 133 in a non-uniform manner. The force of gravity can also be used to spread the glue on the outer sides 130, 133 after applying glue to an application region that is positioned close to the first short lateral side 124 or the second short lateral side 125 of the heater core 103.

The glue securely bonds the frame element 104 to the heater core 103. Additionally the glue damps vibrations caused by the PTC-elements 110. Thereby the clip-connections shown in Fig. 1 and Fig. 2 can advantageously be omitted. This allows the use of electric heating elements 107 of larger sizes and thereby to increase the efficiency of the electric heater 101.

An example of how the application regions 136, 137, 138 are distributed on the first outer side 130 of the first contact sheet 128 and the second outer side 133 of the second contact sheet 129 is shown in Fig. 3. A first application region 136 is arranged respectively adjacent to the first short lateral side 124 of the heater core 103. A second application region 137 is respectively arranged equally spaced between the first short lateral side 124 and the second short lateral side 125 of the heater core 103. A third application region 138 is arranged respectively adjacent to the second short lateral side 125 of the heater core 103.

Fig. 4 shows a detail of the electric heater 101 according to Fig. 3. The electric heating elements 107 are arranged parallel to the first contact sheet 128 and the second contact sheet 129. The detail view shown in Fig. 4 illustrates the second application regions 137 according to Fig. 3. Drops of glue 139 have been applied to the second application regions 137 on the first outer side 130 of the first contact sheet 128 and the second outer side 133 of the second contact sheet 129. The glue drops 139 securely bond the frame element 104 to the heater core 103.

While the invention has been shown in Fig. 1, Fig. 2, Fig. 3 and Fig. 4 in one preferred embodiment, it will be clear to those skilled in the arts to which it pertains that a variety of modifications and changes can be made thereto without departing from the scope of the invention.

## Claims

1. Electric heater (1, 101), in particular for a heating or an air-conditioning system of a motor vehicle, with a heater core (3, 103) comprising a plurality of electric heating elements (7, 107) and comprising a plurality of radiator elements (9, 109, 132, 135), the electric heater having at least one frame element (4, 104) and having an electronic controller (2, 102), wherein the heater core (3,103) comprises a first long lateral side (122) and a second long lateral side (123) opposite the first long lateral side (122), wherein the electric heating elements (7, 107) and the radiator elements (9, 109, 132, 135) are arranged substantially parallel to each other and parallel to the first long lateral side (122) and the second long lateral side (123) of the heater core (3, 103), **characterised in that** the at least one frame element (104) is connected to the first long lateral side (122) and/or the second long lateral side (123) of the heater core (3, 103) by gluing.

2. Electric heater (1, 101) according to claim 1, **characterised in that** the at least one frame element (4, 104) comprises an inner rim (127), wherein at least one portion of the inner rim (127) is connected to the first long lateral side (122) and/or the second long lateral side (123) of the heater core (3, 103) by gluing.

3. Electric heater (1, 101) according to claim 1 or 2, **characterised in that** the electric heating elements (7, 107) comprise contact sheets (8, 108, 128, 129), wherein a first contact sheet (128) is arranged at the first long lateral side (122) of the heater core (3, 103) and a second contact sheet (129) is arranged at the second long lateral side (123) of the heater core (3, 108), wherein the at least one frame element (104) is connected to the first contact sheet (128) and/or connected to the second contact sheet (129) by gluing.

4. Electric heater (1, 101) according to claim 3, **characterised in that** the first contact sheet (128) comprises a first outer side (130) which is facing away from the heater core (3, 103) and the second contact sheet (129) comprises a second outer side (133) which is facing away from the heater core (3, 103), wherein the at least one frame element (4, 104) is connected to the first outer side (130) and/or the second outer side (133) by gluing.

5. Electric heater (1, 101) according to claim 2, 3 or 4, **characterised in that** the inner rim (127) of the at least one frame element (4, 104) comprises a first longitudinal side (140) and a second longitudinal side (141) opposite the first longitudinal side (140), wherein the first longitudinal side (140) is connected to the first long lateral side (122) of the heater core (3, 103) and the second longitudinal side (141) is connected to the second long lateral side (123) of the heater core (3, 103) by gluing.

6. Electric heater (1, 101) according to claim 4 or 5, **characterised in that** the first contact sheet (128) comprises a first inner side (131) opposite the first outer side (130) and the second contact sheet (129) comprises a second inner side (134) opposite the second outer side (133), wherein the first inner side (131) is connected to a first outer radiator element (132) and the second inner side (134) is connected to a second outer radiator element (135) by gluing or brazing.

7. Electric heater (1, 101) according to one of the previous claims, **characterised in that** the at least one frame element (4, 104) comprises a plurality of through openings (142) and the radiator elements (9, 109, 132, 135) form interstices (11, 111), wherein the through openings (142) and the interstices (11, 111) can be flowed through by a fluid in a flow direction F perpendicular to a longitudinal extension direction L of the electric heating elements (7, 107).

8. Electric heater (1, 101) according to one of the previous claims, **characterised in that** at least one of the electric heating elements (7, 107) comprises at least one PTC-element (10, 110).

9. Electric heater (1, 101) according to one of the previous claims, **characterised in that** the electronic controller (2, 102) is arranged on a first transverse side (12) of the at least one frame element (4, 104) perpendicular to the first long lateral side (122) and the second long lateral side (123) of the heater core (3, 103).

10. Electric heater (1, 101) according to claim 3, 4, 5, 6, 7, 8 or 9, **characterised in that** the electronic controller (2, 102) comprises electric connectors (6, 106) which are electrically connected to either a positive pole of a power supply or a negative pole of a power supply and arranged in an alternating order, wherein the first contact sheet (128) or the second contact sheet (129) is electrically connected to one of the electric connectors (6, 106).

11. Electric heater (1, 101) according to one of the previous claims, **characterised in that** the electronic controller (2, 102) comprises a housing (143), wherein the at least one frame element (4, 104) is connected to the housing (143) of the electronic controller (2, 102) by at least one clip connection (144).

12. Electric heater (1, 101) according to one of the previous claims, **characterised in that** the at least one frame element (4, 104) frames the heater core (3, 103).
